(19) Europäisches Patentamt European Patent Office Office européen des brevets

(11)  **EP 1 271 803 B1**

(12)  **EUROPEAN PATENT SPECIFICATION**

(45) Date of publication and mention
of the grant of the patent:
**20.08.2008   Bulletin 2008/34**

(51) Int Cl.:
***H04B 7/26*** *(2006.01)*

(21) Application number: **02291434.5**

(22) Date of filing: **10.06.2002**

(54) **Method and device for frame construction in a TDMA system**

Verfahren und Gerät zum Aufbau eines Rahmens in einem TDMA-System

Procédé et dispositif de construction de trame dans un système TDMA

(84) Designated Contracting States:
**AT BE CH CY DE DK ES FI FR GB GR IE IT LI LU MC NL PT SE TR**

(30) Priority: **29.06.2001   FR 0108655**

(43) Date of publication of application:
**02.01.2003   Bulletin 2003/01**

(73) Proprietor: **Mitsubishi Electric Information Technology Centre Europe B.V.
1101 AG  Amsterdam Zuidoost (NL)**

(72) Inventors:
• **Mangin, Christophe
35310 Bréal sous Montfort (FR)**
• **Rollet, Romain
35000 Rennes (FR)**

(74) Representative: **Verdure, Stéphane
Cabinet Plasseraud
52 rue de la Victoire
75440 Paris Cedex 09 (FR)**

(56) References cited:
**EP-A- 1 065 903          DE-A- 19 907 019**

• **KADELKA A ET AL: "Performance evaluation of the MAC protocol of the ETSI BRAN HIPERLAN/ 2 standard" EUROPEAN WIRELESS '99, MUNICH, GERMANY, 6-8 OCT. 1999, no. 157, pages 157-162, XP002191785 ITG-Fachbericht, 1999, VDE-Verlag, Germany ISSN: 0932-6022**
• **KHUN-JUSH J ET AL: "HIPERLAN TYPE 2 FOR BROADBAND WIRELESS COMMUNICATION" ON - ERICSSON REVIEW, ERICSSON. STOCKHOLM, SE, no. 2, 2000, pages 108-119, XP000931612 ISSN: 0014-0171**

**Description**

TECHNICAL FIELD

This invention concerns a method and a device for frame construction in a TDMA system (Time-Division Multiple Access), in particular a system conforming to the standard HIPERLAN/2.

It refers to the field of communications by data networks, in particular WLAN (Wireless Local Area Network).

BACKGROUND OF THE INVENTION

The standard called HIPERLAN type 2 (High PERformance Local Area Network), more simply referred to as the HIPERLAN/2 or H/2 standard, is a standard established by the ETSI (European Telecommunication Standardization Institute).

This standard defines a high rate cell system in which each radio cell is controlled by a central access point (hereinafter referred to as AP, standing for Access Point) covering a certain geographical zone and that can be connected to a Core Network. The system can be deployed indoors as well as outdoors. Under normal operating conditions, a Mobile Terminal (MT) communicates with other MTs or with the Core Network via the AP. However, different MTs belonging to the same radio cell can exchange data with one another. In both cases, access to the transmission channel (which in the case of the H/2 is a radio channel) and the allocation of radio resources to MTs is controlled by the AP.

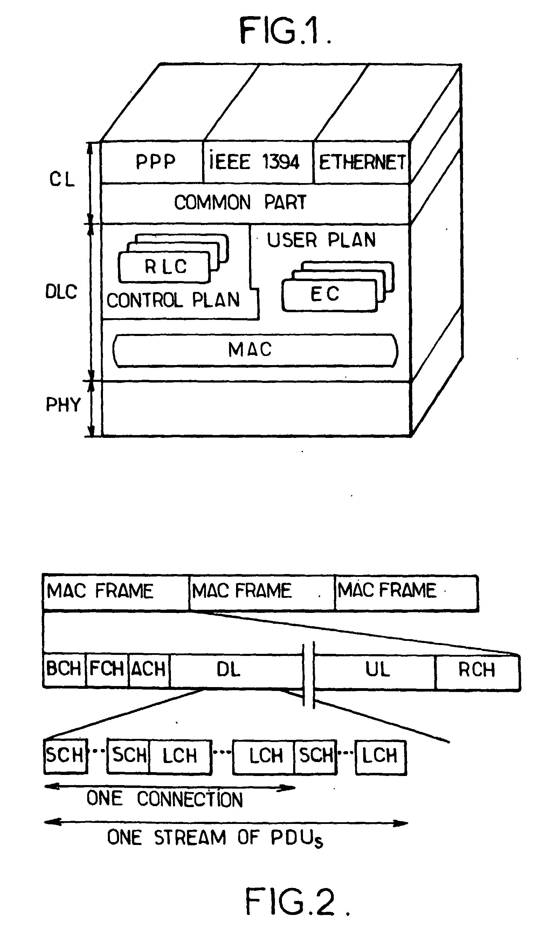

The stacking of the H/2 standard protocol layers is illustrated in the diagram of figure 1.

The H/2 standard defines a physical layer, hereinafter referred to as PHY layer, a Data Link Control Layer (hereinafter referred to as the DLC Layer) and above the DLC layer, a Convergence Layer (CL ).

The CL comprises a common sub-layer and sub-layers that are specific to respective core networks. It has two essential functions: adapting the service requests coming from the higher layers to the service offered by the DLC layer and converting the data packets (of variable size) from the higher layer into Protocol Data Units (PDUs) of a fixed size, that are subsequently processed by a transmission channel access control sub-layer (hereinafter referred to as MAC layer, standing for Medium Access Control) of the DLC layer. To date, specific sub-layers have been developed for ETHERNET applications (IEEE 802.3), for network protocols like ATM (Asynchronous Transfer Mode) or yet again PPP (Point-to-Point Protocol) and for the IEEE 1394 protocols and applications.

The DLC layer is the one managing user connections between MTs. It includes a control plan that incorporates a Radio Link Control sub-layer (hereinafter referred to as RLC layer). In addition, it includes a user plan including, on the one hand, an Error Control block (EC) and on the other hand, the aforementioned MAC layer. The transport of user data via the MAC layer is connection-oriented. Essentially, the RLC layer has three functions: to manage the radio resources (power control, frequency selection, handovers), to associate new MTs with the system and to control the connections. Finally, the EC block can support different error correction modes, such as the acknowledge mode (referred to as the ARQ mode, standing for Automatic Retransmission Query), the repetition mode and the Forward Error Correction mode (FEC).

Access to the air interface is of the dynamic TDMA type with TDD (Time-Division Duplex). The basic structure of a data frame in the MAC layer (hereinafter referred to as MAC frame) at the air interface has a fixed duration of 2 ms (milliseconds). In a centralized mode, it includes fields for the broadcast control, frame control, access feedback control, data transmission on the downlink and on the uplink, and random access. This basic structure is illustrated in the diagram of figure 2.

The broadcast phase includes a broadcast channel (BCH, standing for Broadcast CHannel), a frame channel (FCH, standing for Frame CHannel) and access feedback channels (ACH, standing for Access Feedback CHannel). The BCH channel transmits general information and control information concerning the AP whereas the FCH channel contains an accurate description of the way in which the MAC frame resources have been allocated to different connections.

A downlink (DL) phase includes user specific control information and user data transmitted from the AP to the MTs. Reciprocally, an uplink (UL) phase supports user-specific control information and user data transmitted from the MTs to the AP.

At the end of the frame, a random access phase supports a contention channel (hereinafter referred to as the RCH channel), used by the MTs to transmit short control messages to the AP when no resource has been allocated to them by the AP in the UL phase. The ACH channel, present in the broadcast phase, supplies the feedback information (i.e., indicates success or failure) subsequent to the access attempts made by the MTs during the contention phase.

In the UL and DL phases, the traffic coming from and respectively intended for an MT is transmitted in multiplex in what is referred to as a stream of PDUs. A stream of PDUs contains the PDUs of the MAC layer (also referred to as MAC-PDUs) belonging to the connections having the same MT as common termination. A connection transports user data in PDUs containing 54 bytes, hereinafter referred to as "Long" PDUs or LCH-PDUs, that form a transport channel of the type LCH (standing for Long CHannel). It also transports connection control messages in PDUs containing 9 bytes, hereinafter referred to as "short" PDUs or SCH-PDUs, that form another transport channel SCH (standing for Short Channel). In a given frame, the two types of PDUs are grouped together by connections.

In so far as the resource allocation is centralized in the AP, the resource must be requested before the actual transmission of their PDUs by the MTs transmitting via the UL phase. To do this, a specific type of signaling/control message, called the Resource Request (RR) is encapsulated in an SCH-PDU of the UL phase.

In the AP, the MAC layer protocol functions are used to organize access to the radio channel and the transmission of data over it. The composition of the frame is communicated to the MTs via the FCH channel. By decoding this channel first, the MTs are informed of the time interval during which they can insert or extract their PDU, in respectively from the MAC frame.

The FCH channel consists of information elements (hereinafter referred to as IEs, standing for Information Elements) combined into blocks, which are protected Code Rule Checking (CRC), at a rate of 3 IEs per protected block. An IE specifies the number of SCH-PDUs and the number of LCH-PDUs attributed in the MAC frame to a specific connection, the transmission mode on the physical channel for each type of PDU for this connection (i.e. SCH-PDUs and LCH-PDUs) and a time indicator indicating the beginning of the time interval allocated to the connection in the frame. The AP is in charge of organizing the IEs in such a way that the PDUs of connections having the same MT as a common termination, are placed in the same stream of PDUs.

The data unit transmitted via the PHY layer is a burst of variable length. For commodity sake, and to reduce the number of signaling bytes forming a useless load (commonly referred to as "overhead"), the MAC-PDU frames are transmitted on the physical channel, each in a respective burst. Each burst comprises a header, followed by data.

OFDM modulation (standing for Orthogonal Frequency Division Multiplexing) has been chosen in the H/2 standard because of its good performance on highly dispersed channels. One particularity of the H/2 standard is that it offers several modes of transmission on the PHY layer (hereinafter referred to as physical modes or PHY modes), corresponding to combinations of encoding rates and modulation types. For instance, BPSK, QPSK, 16QAM and 64QAM modulations are sub-carrier modulations supported by the H/2 standard. In principle, the number of OFDM symbols needed for the encoding of one PDU is proportional to the robustness of the modulation. An OFDM symbol has a fixed duration of 4 $\mu$s (microseconds). Table I below indicates the binary rate of a connection in millions of bits per second (Mbps) and the number of OFDM symbols used for encoding an LCH-PDC for the various possible PHY modes:

Table I

| PHY mode | Binary rate | Number of OFDM / LCH-PDU symbols |
|---|---|---|
| BPSK ½ | 6 Mbps | 18 |
| BPSK ¾ | 9 Mbps | 12 |
| QPSK ½ | 12 Mbps | 9 |
| QPSK ¾ | 18 Mbps | 6 |
| 16QAM 9/16 | 27 Mbps | 4 |
| 16QAM 3/4 | 36 Mbps | 3 |
| 64QAM 3/4 | 54 Mbps | 2 |

The PHY mode is selected by a process of adapting the link (forming part of the RLC protocol layer) depending on the transmission conditions observed on the radio channel. Each connection, and each transmission direction (uplink or downlink) of a determined connection can use a specific PHY mode. In addition, this PHY mode can vary from one frame to the next frame.

The MAC layer protocol includes a frame construction mechanism (known as the Scheduling Mechanism), based on two particular entities, called respectively the scheduler and the frame builder.

The purpose of the scheduler is to share the resources of the PHY layer between the connections of the DLC layer. The resources considered in this document are mainly the resources in terms of the bandwidth on the radio channel and more especially, the bandwidth available at the DLC layer for the transport of channels other than the channels containing the signaling/control information, that is, the LCH transport channels transporting user data.

The purpose of the frame construction mechanism is not to accept or refuse the opening of new connections according to the available resources. This aspect of resource allocation is handled by another entity that is not described here: the CAC (standing for Connection Acceptance Controller) which is part of the RLC layer protocol. In other words, it is assumed that the bandwidth allocated to the connections is always compatible with the available resources. Once the bandwidth has been allocated to the connections, the scheduler can be used for determining the moments when a PDU of each of these connections is to be transmitted, in theory, over the radio channel to conform to the bandwidth allocated to this connection.

The MAC layer protocol transmits the composition of the frame in the FCH channel, that is, at the beginning of the frame. The composition of the frame must then be determined before the beginning of the frame itself. According to the invention, the allocation of the resources to the connections, that is the scheduling of their PDUs in the frames, and the determination of the composition of each resulting frame, are executed respectively by the scheduler and by the frame builder, during the transmission of the previous frame. By convention, in the following, it will be considered that a PDU has been transmitted as soon as it is selected by the scheduler so as to be inserted by the frame builder into the frame being built, in spite of the fact that this PDU will only be effectively transmitted on the radio channel at a later stage, within that frame.

The scheduler manages a priority file referred to as Fp in the following and in the figures containing parameters, identified as TTi in the following and in the figures. These parameters TTi correspond to time labels associated with the connections, indicating respectively the transmission time of the next PDU of the connection having index i, as determined by the scheduler. In fact, the scheduler schedules the TTi parameters in the priority queue Fp in increasing order, so that the top of the queue always contains the TTi parameter of the connection for which a PDU must be the next PDU inserted into the frame being built. The priority queue Fp is memorized in an ad hoc memory structure.

For each established connection having index i, the scheduler keeps the parameters associated with the connection up-to-date. These parameters are memorized in a memory structure associated with the connection, called the connection context and referred to as CCi in the following and in the figures. In addition, it manages a transmission waiting queue referred to as Fi in the following and in the figures, which contains the PDUs of the connection having index i received from the higher layer and waiting for transmission. This queue Fi is memorized in an ad hoc memory structure.

The parameters of the context CCi include a parameter referred to as Qi in the following and in the figures, referring to the number of PDUs of the connection having index i stored in waiting queue Fi of this connection.

They also include a time-related label referred to as TTTi in the following and in the figures (standing for Theoretical Transmission Time) indicating the moment when, in theory, the transmission of a PDU of the connection having index i to take place in order to comply with the bandwidth allocated to this connection. The TTTi parameter is initialized with a value 0 when the connection is opened. Then, it is updated, if necessary, each time a PDU is received from the higher layer whereas the connection is inactive (i.e. each time a first PDU enters the waiting queue Fi) and is then inserted into the priority queue Fp. The parameter TTTi is also updated each time a PDU of the connection is transmitted (i.e., each time a PDU exits from the queue Fi). It is then inserted into the priority queue Fp if the waiting queue Fi still contains at least one other PDU.

Since an LCH-PDU has a fixed length (in bytes) the bandwidth of the connection, negotiated on the opening of the connection (via the aforementioned CAC), can be expressed in the form of a theoretical time interval known as Ti, separating the transmission of two consecutive connection PDUs. The theoretical time interval Ti is another parameter associated with the connection having index i and, as such, is saved in the CCi context of that connection. The scheduler uses it for updating the TTTi parameter.

The purpose of the frame builder is to determine the moments when a PDU can be inserted in multiplex into the radio link, i.e., the moments when the time interval allows the reception of the PDU chosen by the scheduler, while taking into consideration the PHY mode of that PDU. The frame builder is not described further in this document.

The scheduler includes a selection module which selects the connection having the TTi parameter at the top of priority queue Fp, and which supplies to the frame builder a PDU of this connection, extracted specifically to this end from the waiting queue Fi of this connection. The scheduler implements a scheduling algorithm to keep the TTTi parameter of each connection up to date. For implementing this algorithm, it might be worth thinking about the VSA (standing for "Virtual Scheduling Algorithm") described in the literature about the ATM.

According to such an algorithm, the TTTi parameter would be updated each time a PDU exists from the waiting queue Fi using a formula of the type $TTTi = TTTi + Ti$. In other words, this algorithm provides for the fact that, as soon as a PDU of a determined connection is transmitted, a duration Ti must elapse before the next transmission of a PDU of that connection. This leads to so-called shaping of the connection traffic, guaranteeing that its bit rate never exceeds a peak value defined by parameter Ti. It is as if the PDUs of a given connection were spaced in time of a duration of Ti at the least.

But for connections having a low bit rate, this duration can exceed the duration of a frame. Accordingly, these connections have at the most only one PDU inserted in each frame. This leads to wastage of the resources because, since the frame length is fixed, the insertion of a single PDU of a given connection into the frame also requires insertion into this frame, proportionally, of more signaling/control elements than if several PDUs of the connection were inserted into said frame. According to the PHY mode associated with this PDU, these signaling elements may even use more resources than the transmitted PDU itself.

Indeed, multiplexing the data flows of the various connections and describing the composition of the frame mean particularly cumbersome signaling. In particular, each connection uses an IE (i.e. 8 bytes encoded in the most robust PHY mode) added on transmission of a stream of PDUs into the FCH channel. Under these conditions, the worst case occurs when only one PDU of a connection is inserted into a frame, and when this PDU is also the only one exchanged with a given MT. In a configuration of this type, the stream of PDUs that results contains the only PDU which nevertheless calls for an IE in the FCH, coded into the 3 OFDM symbols, and a stream of PDUs preamble which may require up to 4 OFDM symbols. This overhead, due to signaling and construction of the signaling stream, is not negligible compared to the effective size of the PDU in the physical channel, which can be reduced to 2 OFDM symbols when coded in the most efficient PHY mode.

In other words, connections with a low bit rate have a considerable effect on the efficiency of transmission over the radio channel, defined as the ratio between the resources devoted to user information transmission to the total resources used. Indeed, all the connections having a bit rate of less than 192 Kbps (kilo-bits per second), corresponding to the transmission of less than one LCH-PDU per frame, are concerned by this drawback.

SUMMARY OF THE INVENTION

The object of the invention is to attenuate the aforementioned drawback resulting from the building of frames implementing this type of scheduling algorithm, in particular for a system conforming to the H/2 standard, but also in any system conforming to any standard if this standard implies a similar problem.

Accordingly, the invention proposes a method for building frames for a time division multiple access system according to claim 1.

In this way, the invention allows to reduce the overhead by optimizing the use of signaling transmitted at the beginning of the frame, leaving more resources available for user data in the frame. The transmission efficiency on the channel is thus improved.

The method is optimized when the time interval between the transmission of two successive grouped data units of a given connection is set at its maximum value corresponding to the transmission time of a data unit for this connection, transmitted at the maximum rate offered by the transmission channel.

To limit any jitter induced by the method, the delay imposed on a data unit is at most equal to a determined maximum delay. Thus, a compromise is obtained between improved transmission efficiency as obtained and jitter caused to the connections.

The invention also proposes a frame construction device for a time division multiple access system according to claim 10.

BRIEF DESCRIPTION OF THE DRAWINGS

Other characteristics and advantages of the invention will appear from reading the description that will follow. It is purely illustrative and should be read with respect to the attached drawings in which the following are represented:

- in figure 1, already analyzed: a diagram illustrating the stacking of the protocol layers according to the H/2 standard;
- in figure 2, also already analyzed: a diagram illustrating the frame structure according to the H/2 standard;
- in figure 3: a block diagram of a device according to the invention;
- in figure 4: a diagram schematizing the steps of the method according to the invention, which are implemented whenever a PDU of a determined connection is received from the higher layer;
- in figure 5: a diagram schematizing the steps of the method according to the invention, which we implemented whenever a PDU of the connection is transmitted;
- in figure 6: a diagram illustrating the principle of the method according to the invention and
- in figure 7: a curve indicating the shape of transmission efficiency against the number of OFDM symbols devoted to the encoding of a PDU.

DETAILED DESCRIPTION OF THE INVENTION

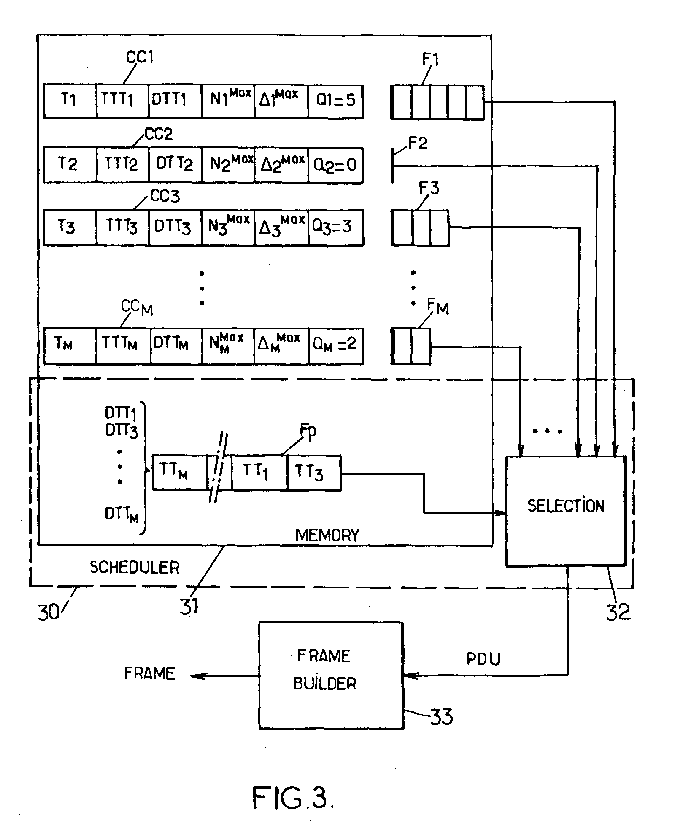

Figure 3 depicts a block diagram of a device according to the invention in an example where the AP manages M connections being simultaneously established (where M is a non-zero integer).

The device comprises a scheduler 30. The scheduler 30 comprises a memory 31 and a selection module 32. Memory 31 comprises the data structures needed for constructing priority queue Fp as well as queues Fi and connection contexts CCi (for i lying between 1 and M) for the M connections being established at the current instant.

In addition to parameters Ti, TTTi and Qi presented in the introduction, the CCi context of each connection having index i includes, according to the invention, a parameter DTTi, a parameter $\Delta_i^{Max}$ and a parameter $N_i^{Max}$ associated with the connection. Parameter DTTi is a time label indicating a theoretical instant of transmission with delay (delayed theoretical transmission time) of the next PDU of the connection to be transmitted according to the invention. Parameter $\Delta_i^{Max}$ is a duration corresponding to the maximum delay that will be tolerated of the scheduler for imposition on the PDUs of the connection having index i to obtain the effect of grouping the PDUs in a frame, which forms the basis of the invention. The number $N_i^{Max}$ is a parameter which will be referred to below.

In the following, variable $t_0$ refers to the current instant, expressed in the same units as the parameters Ti, TTTi, DTTi and $\Delta_i^{Max}$ associated with the connection. The variable $t_0$ is given by a system local time base of the system.

The device contains naturally a frame builder 33. The description of the operation of priority queue Fp, selection module 32 and frame builder 33 is not within the framework of the present disclosure, since it is not necessary for understanding the invention. Indeed, the invention concerns the scheduling algorithm implemented by scheduler 30 for the injection of values into priority queue Fp.

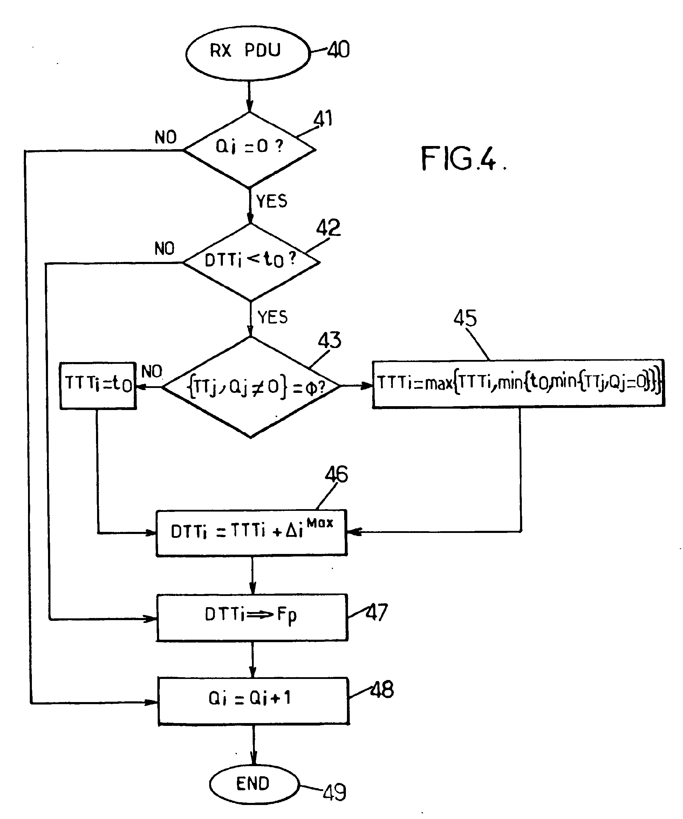

The steps of the method according to the invention as implemented on reception from the higher layer of a PDU of a determined connection, are schematized in the diagram of figure 4.

In this figure, reference 40 refers to a step of receiving a PDU of a determined connection having index i from the higher layer. This PDU will enter the waiting queue Fi of the connection.

In step 41, it is first checked whether waiting queue Fi is empty, i.e. whether parameter Qi is zero or not (Qi = 0 ?).

If the answer is no, it means that the PDU that has just been received is not the first PDU of the connection present in the waiting queue Fi. In this case, it is jumped to step 48 where parameter Qi is incremented by one unit (Qi = Qi + 1), then the end 49 of the algorithm is reached.

Conversely, if the answer is yes, it is moved to step 42, during which one wonders whether the theoretical transmission mode with delay of a PDU of the connection, which is kept up-to-date in the CCi context as the DTTi parameter, has or has not gone through, i.e. whether the DTTi parameter is or is not strictly less than current instant $t_0$ (DTTi < $t_0$ ?).

If the answer is no, it is moved to step 47, in which the value of the parameter DTTi is injected into priority queue Fp as a value for parameter TTi of the connection. Step 47 is then followed by step 48 mentioned above, before reaching the end 49 of the alogorithm.

Conversely, if the answer is yes, it is necessary to update the DTTi parameter. To do this, it is first jumped to a step 43 during which one wonders whether priority queue Fp contains time label TTj of at least one other connection having index j, and whose transmission queue Fj is not empty, i.e. for which parameter Qj is not zero ({TTj, Qj ≠ 0 } = ∅ ?).

If the answer is no, then during a step 44, the value of the variable $t_0$ is assigned to the TTTi parameter of connection having index i (TTTi = $t_0$). In other words, parameter TTTi of the connection is updated by assigning to it the current instant $t_0$.

Conversely, if the answer is yes, then, during a step 45, parameter TTTi of connection index i is updated while assigning to it the maximum value between itself and the minimum value between the value of current instant to and the respective values of first parameter TTTj of the other connections whose transmission queue Fj is not empty (i.e. TTTi = max{TTTi,min{$t_0$,min{TTj,Qj ≠ 0}}}). In other words, parameter TTTi of the connection having index i is updated by assigning to it the maximum value between the current parameter of value TTTi and the minimum value between, on the one hand, the value of current instant to, and on the other hand, the minimum value between the respective values of time labels TTj of priority queue Fp associated with other connections having index j whose transmission queue Fj is not empty.

In the two above cases, it is then moved to a step 46 during which the DTTi parameter of the connection having index i is updated by assigning to it the value of the TTTi parameter increased by the value of the parameter $\Delta_i^{Max}$ (DTTi = TTTi + $\Delta_i^{Max}$). In other words, the value of the DTTi parameter is updated by adding to it the value of the parameter TTTi (as updated according to step 44 or step 45), while the value of parameter $\Delta_i^{Max}$ corresponds to the maximum delay for transmission with delay of the PDU on the transmission channel.

The purpose of step 43 and the distinction between the two cases dealt with in steps 44 and 45 which results from it is to update the TTTi parameter by assigning to it the lowest possible value. In this way, the transmission of the PDU of the connection is not delayed by the possible existence of other connections having already one or several PDUs awaiting transmission. A connection having a binary rate, which transmits few PDUs, is therefore not excessively jeopardized by eventual connections having high binary rate which transmit many PDUs and could therefore monopolize the available resources.

Step 46 is then followed by steps 47 and 48 mentioned above before reaching the end 49 of the algorithm.

The above steps are performed using ad hoc software, of which an algorithm can be summarized in the following sequence of instructions:

```
If Qi = 0
    If DTTi < to
        If {TTj,Qj ≠ 0} ≠ ∅
            TTTi = max{TTTi,min{t0,min{TTj,Qj ≠ 0}}}
```

```
        Else
                TTTi = to
        End if
        DTTi = TTTi + ΔiMax
    End if
    Insert TTTi in queue Fp
End If
Qi = Qi + 1
```

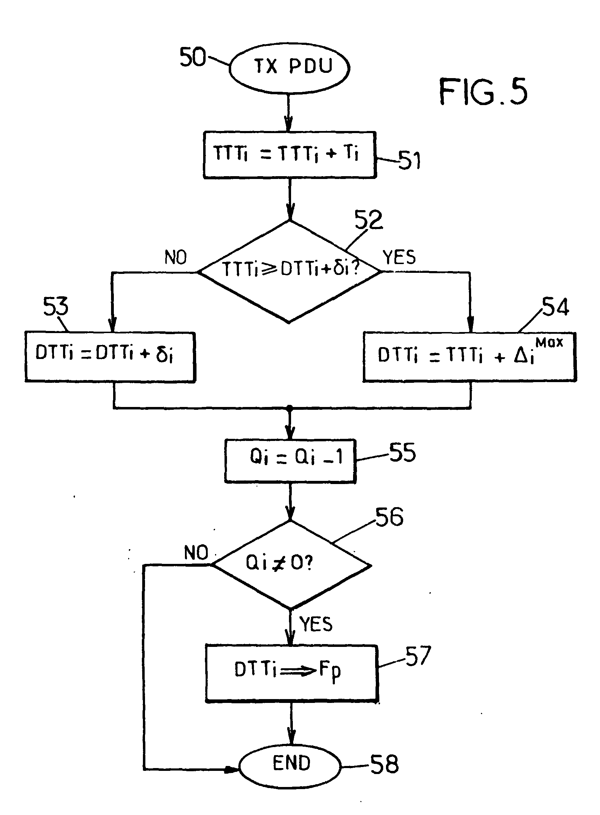

The timing diagram of figure 5 schematizes the steps of the method implemented on output of a PDU from queue Fi for a determined connection having index i.

The outgoing PDU is selected by selection module 32 of the scheduler for insertion into the frame being constructed, with a view to being transmitted on the radio channel. As a shortcut, it is considered here that this PDU is transmitted. In figure 5, step 50 corresponds to this transmission.

Note that connection having index i to which the thus selected PDU belongs, is that of connections having index j with not empty queue Fj ($Qj \neq 0$) and for which, in addition, the associated time label $TTi$ is at the top of the priority queue Fp, i.e. the one whose associated time label $TTi$ is the smallest ($TTi = \min\{TTj, Qj \neq 0\}$). This results from the operation of priority queue Fp and that of selection module 32 for which, as indicated previously, there will not be any more explanations given here. In addition, note that this PDU is effectively transmitted when the condition $DTTi \leq t_0$ is verified, i.e. when the theoretical instant of transmission with delay $DTTi$ is less than current instant to.

The purpose of the steps following step 50 is essentially to update the $DTTi$ parameter of the connection having index i.

During step 51, the $TTTi$ parameter is updated conventionally by adding to the prior value the value of theoretical time interval $Ti$ contained in connection context $CCi$. Note that the theoretical time interval $Ti$ is determined by the average theoretical value of the binary rate of the connection, the latter having been negotiated on the opening of the connection.

In a step 52, one then wonders whether the delay imposed on the connection because of the $DTTi$ parameter injected into priority queue Fp instead of parameter $TTTi$ is or is not compensated. In practice, the step consists in checking whether the value of parameter $TTTi$, updated during step 51, is greater than or equal to the current value of parameter $DTTi$ increased by the value of time interval $\delta i$ between the transmission of two successive grouped data units ($TTTi$ and $DTTi + \delta i$).

If the answer is no, then, in step 53, the value of parameter $DTTi$ is updated by adding to the current value of this parameter $DTTi$ the value of a time interval $\delta i$ between the transmission of two successive grouped data units.

Conversely, if the answer is yes, then in step 54, the value of parameter $DTTi$ is updated by adding to the value of parameter $TTTi$, updated during step 51, the value of the parameter $\Delta i^{Max}$ associated with the connection. Note that this value $\Delta i^{Max}$ corresponds to the maximum delay tolerated for the connection having index i.

In the one as in the other one of the above two cases, it is then moved to a step 55 in which the parameter $Qi$ associated with the connection is updated by decrementing it by one unit ($Qi = Qi - 1$).

Then, in a step 56, it is checked whether there is at least one PDU remaining in the transmission queue Fi of connection having index i.

If the answer is yes, then, in a step 57, the value of the parameter $DTTi$, which was updated in step 53 or step 54, is injected into priority queue Fp as a new time label $TTi$ associated with connection having index i. In other words, the value of the parameter $DTTi$ as updated is entered as a new time label $TTi$ into the sheduler's priority queue Fp. Then the end 58 of the algorithm is reached.

Conversely, if the answer is no, it is moved directly to the end 58 of the algorithm.

The following steps are carried out by ad hoc software, the algorithm of which can be summarized in the following sequence of instructions:

```
 TTTi = TTTi + Ti
If TTTi ≥ DTTi + δi
      DTT¡ = TTT¡ + iMax
Else
      DTTi = DTTi + δi
 End if
Qi = Qi -1
 If Qi ≠ 0
      Insert DTT¡ in queue Fp
 End if
```

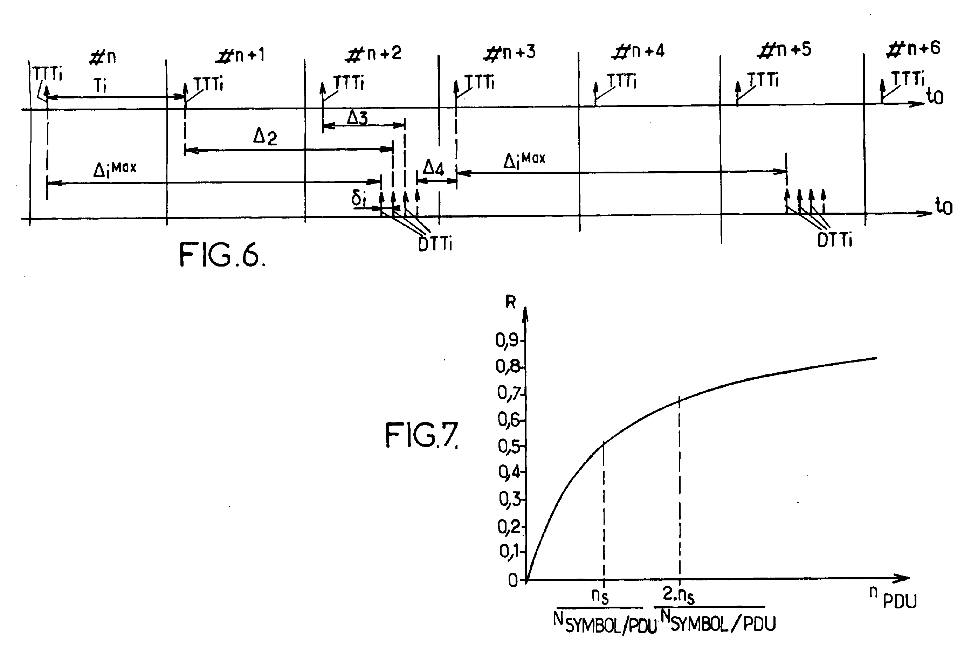

Figure 6 is a timing diagram illustrating the principle of grouping PDUs of a determined connection in a MAC frame resulting from the implementation of the method described above.

In this figure, the top time axis indicates the theoretical transmission times TTTi of a PDU of a determined connection having index i, calculated from the value of parameter Ti whenever a PDU of the connection is transmitted. The bottom time axis indicates the delayed theoretical transmission times DTTi, calculated under the same conditions. For simplicity's sake and for the clarity of the disclosure, it will be considered a case in which the effective rate of the connection is higher than the average theoretical rate (the latter determines the value of the theoretical time interval corresponding to parameter Ti of the connection). In this way, the connection is always active (i.e., $Qi \neq 0$ at all times). In addition, we consider a particular case in which the average theoretical rate of the connection is such that the theoretical time interval Ti corresponding to it equals the duration of a frame, i.e. 2 ms. In the figure, the separation between two successive frames is symbolized by vertical lines so that the duration of a frame corresponds to a time window contained between two such successive lines. In addition, successive frames are referred to as #n, #n+1, #n+2, etc.

On reception of a first PDU from the higher layer or on transmission of a PDU of the connection, the TTTi parameter is updated (step 44 of 45 of figure 4 or respectively, step 51 of figure 5). In the example, it is considered that the value is within the time window of the frame #n. In addition, the DTTi parameter is also calculated by adding the delay $\Delta i^{Max}$ to the value of the TTTi parameter (step 46 of figure 4 or, respectively, step 54 of figure 5). In the example, the value of the parameter DTTi is then lying within the frame #n+2.

When instant $t_0$ reaches the value of DTTi, a PDU of the connection is selected for transmission in the #n+2 frame being built. The parameter TTTi is then updated (step 51 of figure 5) so that TTTi = TTTi + Ti. By hypothesis, the new value of parameter TTTi is then to be found in this time window of the frame #n+1.

The result of the test on step 52 is then negative because the parameter TTTi as so updated is less than the parameter DTTi increased by $\delta i$ (TTTi < DTTi + $\delta i$). In other words, the time difference $\Delta 2$ in the figure, corresponding to $\Delta 2$ = DTTi + $\delta i$ - TTTi, is positive. Accordingly, the DTTi parameter is updated so that DTTi = DTTi + $\delta i$ (step 53 of figure 5) and is then lying within the time window of the frame #n+2.

When instant $t_0$ reaches the value of DTTi, a new PDU of the connection is selected for transmission in the frame #n+1 being built. The TTTi parameter is then updated again in the same way as previously. It is then lying within the time window of frame #n+2. Moreover, testing of step 52 is still negative. Indeed, the time-related difference referred to as $\Delta 3$ in the figure, corresponding to $\Delta 3$ = DTTi + $\delta i$ - TTTi is always positive. That is why this TTTi parameter is again updated by DTTi = DTTi + $\delta i$. It is still lying within the time window of frame #n+2.

When instant $t_0$ reaches the value of DTTi, a new PDU of the connection is selected for transmission in this frame #n+2 being built, while parameter TTTi is again updated in the same way as previously. It is then lying within the time window of the frame #n+3. This time, the test on step 52 is positive because TTTi ≤ DTTi + $\delta i$. The time difference referred to as $\Delta 4$ in the figure, which corresponds to $\Delta 4$ = DTTi + $\delta i$ - TTTi is negative in this case. The delay imposed on connection by the effect of delay $\Delta i^{Max}$ has thus been compensated. The DTTi parameter is then updated by DTTi = TTTi + $\Delta i^{Max}$ (step 54 of figure 5). This value is therefore lying within the time window #n+5. Accordingly, the next PDU of the connection will be selected (when current moment $t_0$ has reached the new value of DTTi) only for transmission in frame #n+5.

From the above, it results that in this example, three PDUs of the connection are grouped together for transmission in frame #n+2, three others in frame #n+5, etc., whereas no PDUs are transmitted in frames #n, #n+1, #n+3, #n+4, #n+6, etc. (as shown in the bottom timing diagram). By applying a VSA type scheduling algorithm, in this example, we should have caused the transmission of one PDU per frame (as shown in the top time diagram). In other words, the method according to this invention, from the point of view of a determined connection, is designed to raise locally for certain periods the binary rate of PDU transmission (without being limited to the average theoretical value of this binary rate), while these periods are interrupted with periods of silence during which no PDUs of the connection are transmitted. This improves transmission efficiency.

The maximum delay $\Delta i^{Max}$ imposed on the connection is therefore chosen so as to remain less than a value beyond which the quality of service (or QoS) negotiated on opening of the connection (expressed, for instance, in terms of the maximum time between the transmission of two PDUs of the connection) is no longer complied with.

According to an advantageous embodiment, the time interval $\delta i$ between the transmission of two data units of the connection having index i, grouped together successively, equals the transmission time of a PDU via the transmission channel (taking into consideration the PHY mode of the connection). In this way, the PDUs of the connection having index i, grouped together successively, are transmitted consecutively, i.e. without the transmission of a PDU of another connection between two PDUs of the connection having index i. Note that the binary rate of the transmission of the PDUs of the connection is then, punctually, equal to the maximum binary rate.

If the number of PDUs of the connection which are grouped together in a determined MAC frame according to the principle described above is $n_{PDU}$, if $n_s$ is the number of OFDM symbols in the frame devoted to the transmission of signaling information associated with the connection, and if $N_{symb/PDU}$ is the number of OFDM symbols in the frame devoted to PDU encoding of the connection, the efficiency R of the transmission of a MAC frame is given by the following relation:

$$\frac{n_{PDU} x N_{sym/PDU}}{n_{PDU} x N_{sym/PDU} + n_s} = \frac{n_{PDU}}{n_{PDU} + \dfrac{n_s}{N_{symb/PDU}}} \qquad (1)$$

Figure 7 depicts the efficiency curve R of transmission over the radio channel against to the number $n_{PDU}$.

This curve shows that the efficiency increases with the $n_{PDU}$ number, but that the growth is asymptotic. Improved efficiency is therefore considerable for low values of the $n_{PDU}$ number, but becomes barely significant for high values of this number. Furthermore, the higher the $n_{PDU}$ number the more the jitter induced by the PDU grouping method will increase. Therefore, it appears advisable to seek a compromise between improved efficiency R and an increase in jitter resulting from the implementing of this method.

To do this, it is better not to group into a determined frame more than a maximum determined number of data units of the same connection.

A good tradeoff appears to be obtained when $n_{PDU} = 2 \times \dfrac{n_s}{N_{symb/PDU}}$. Efficiency R of the connection then equals 66.6%.

Table II below gives the value $2 \times \dfrac{n_s}{N_{symb/PDU}}$, for the various PHY modes possible for the H/2 standard and in three different cases: for a connection of the DL channel, for a connection of the UL channel with a so-called "short" header, a stream of PDUs (first option available according to the H/2 standard) and finally, for connection on the UL channel with a so-called "long" header of a stream of PDUs (second available option according to the H/2 standard).

Table II

| PHY mode | DL channel | Short leader UL channel | Long leader UL channel; |
|---|---|---|---|
| BPSK ½ | 0.55 | 0.67 | 0.78 |
| BPSK ¾ | 0.84 | 1 | 1.17 |
| QPSK ½ | 1.11 | 1.33 | 1.56 |
| QPSK ¾ | 1.67 | 2 | 2.33 |
| 16QAM 9/16 | 2.5 | 3 | 3.5 |
| 16QAM 3/4 | 3.3 | 4 | 4.67 |
| 64QAM 3/4 | 5 | 6 | 7 |

This table shows that for almost all the possible types of connections (that is to say, connections for which the value $2 \times \dfrac{n_s}{N_{symb/PDU}}$ is greater than unity), the method of grouping together PDUs according to the invention is appropriate, in that it allows improvement in the efficiency of the connection without, however, uselessly increasing the jitter on that connection.

In a preferred embodiment, the method is arranged so as to group together in a frame, a recommended number $Ni^{Max}$ of PDUs of the same connection, equal to the integer value immediately higher than the value $2 \times \dfrac{n_s}{N_{symb/PDU}}$. Beyond that limit, the improvement in efficiency R remains low and does not appear to justify the increase in the jitter implied by the method of grouping together the PDUs in accordance with the invention.

In other words, when the system conforms to the HIPERLAN/2 standard, the data units of the same connection are grouped together in the same frame as soon as the number of $2 \times 2 \times \dfrac{n_s}{N_{symb/PDU}}$ is greater than unity, where Ns is the number of OFDM symbols in the frame devoted to the transmission of signaling information related to the connection, and where $N_{symb/PDU}$ is the number of OFDM symbols in the frame devoted to the encoding of a data unit (i.e., PDU) of the connection.

Table III below indicates the value of the number $Ni^{Max}$ for the various PHY modes possible in the H/2 standard and in the three cases considered above in table II.

Table III

| PHY mode | DL channel | Short leader UL channel | Long leader UL channel; |
|---|---|---|---|
| BPSK ½ | 1 | 1 | 1 |
| BPSK ¾ | 1 | 1 | 2 |
| QPSK ½ | 2 | 2 | 2 |
| QPSK ¾ | 2 | 2 | 3 |
| 16QAM 9/16 | 3 | 3 | 4 |
| 16QAM 3/4 | 4 | 4 | 5 |
| 64QAM 3/4 | 5 | 6 | 7 |

The number $Ni^{Max}$ is a parameter of the connection having index i and, as such, stored in the CCi context of that connection (figure 3).

As can be seen from the reading of the above disclosure, the method according to the invention is particularly simple to implement. As indicated, it causes some jitter in the connections but this can be limited to the level required to obtain a substantial improvement in the connection efficiency, while adjusting the parameter $\Delta i^{Max}$. Obviously, this method cannot prevent with any degree of certainty, the presence of only one PDU of a determined connection in a frame. Indeed, if a connection has a relatively low binary rate to the point that it only has one PDU in the waiting queue Fi, this PDU will be sent alone because there are no others waiting.

In addition, for a connection having a high binary rate, this algorithm is not necessary because several PDUs of the connection will naturally be grouped together in each frame. The algorithm is then advantageously turned off to avoid the exclusive use of the frame by this connection alone. As to this point, it is considered that a connection having a high binary rate is one whose connection parameter Ti leads to a greater number of PDUs per frame than the recommended number $Ni^{Max}$ of PDUs. Note that the latter value can be obtained from table III given above.

For a connection whose maximum delay parameter $\Delta i^{Max}$ is not defined, this maximum delay can be calculated to achieve a determined number of PDUs per frame containing grouped PDUs, less than or equal to the number $Ni^{Max}$ given in table III given above.

**Claims**

1. Method for building frames for a time division multiple access system consisting in the dynamic allocation of determined time intervals in the frame for the transmission of the data units of various connections established simultaneously through a single transmission channel, the method comprising steps for grouping together in the same frame the data units of the same connection by delaying the transmission of at least some of these data units, so that a time interval ($\delta i$) between the transmission of two successive grouped data units can be less than a theoretical interval of time (Ti), determined by the value of the average theoretical binary rate of the connection.

2. A method according to claim 1 whereby the delay imposed on a data unit is at the most equal to a maximum delay ($\Delta i^{Max}$).

3. A method according to any one of the previous claims whereby the time interval ($\delta i$) between the transmission of two successive grouped data units equals the transmission time of a data unit via the transmission channel, at the maximum rate offered by that channel.

4. A method according to any of the previous claims whereby, with the system conforming to the standard HIPERLAN/2, the data units of a given connection are grouped together in the same frame as soon as the number $2 \times \dfrac{n_s}{N_{symb/PDU}}$ is greater than unity, where $n_s$ is the number of OFDM symbols in the frame devoted to the transmission of signaling information associated with the connection and where $N_{symb/PDU}$ is the number of OFDM symbols in the frame devoted to the encoding of a data unit (i.e. a PDU) of the connection.

5. A method according to any of the previous claims comprising the steps of:

- managing a priority queue (Fp) containing time labels ($TT_i$) associated with respective active connections wherein such a time label corresponds to a theoretical transmission time, on the transmission channel, of a data unit of the associated active connection;

and, for each established connection,

- managing a transmission waiting queue (Fi) containing the data units of the connection that are ready to be transmitted on the transmission channel;
- keeping up-to-date a first parameter (TTTi) corresponding to a theoretical transmission time of the next connection data unit; and,
- keeping up-to-date a second parameter (DTTi) corresponding to a theoretical transmission time with a delay of the next data unit of the connection.

6. Method according to claim 5 comprising, on the input of the first data unit into the transmission waiting queue of a determined connection, if the value of the second parameter (DTTi) corresponds to an instant prior to current instant (t0), the steps of:

- updating (42-45) the value of said first parameter (TTTi) of the connection;
- updating (46) the value of said second parameter (DTTi) of the connection, by adding to the value of said first parameter (TTTi) as updated whenever necessary, the value corresponding to the maximum delay ($\Delta i^{Max}$); and, in all cases,
- entering (47) into the priority queue (Fp) the updated value of said second parameter (DTTi) as time label (TTi) associated with the connection.

7. Method according to claim 6 wherein, whenever necessary, said first parameter (TTTi) of the connection is updated by assigning to it the value of the current instant (t0).

8. Method according to claim 6, wherein, whenever necessary, said first parameter (TTTi) of the connection is updated by assigning to it a minimum value between, on the one hand, the value of current instant (t0) and on the other hand, the minimum value between the respective values of the time labels (TTi) of the priority queue (Fp) that are associated with other connections whose transmission waiting queue (Fj) is not empty.

9. Method according to any one of claims 5 to 8, comprising, on the output of a data unit of a given connection from the transmission waiting queue, the steps of:

- updating (51) the value of said first parameter (TTTi) of the connection by adding to it the value of said theoretical time interval (Ti);
- updating (52, 53, 54) the value of said second parameter (DTTi) of the connection either by adding (56) to the said updated value of said first parameter (TTTi), a value corresponding to the maximum delay ($\Delta i^{Max}$) if the value of the first updated parameter (TTTi) is greater than or equal to the current value of the second parameter (DTTi) increased by the time interval ($\delta i$) between the transmission of two successive grouped data units, or otherwise, in the opposite case, by adding (55) to the value of the current value of the second parameter (DTTi) the value of the time interval ($\delta i$) between the transmission of two successive grouped data units.
- entering (56, 57) in the priority queue (Fp) the said updated value of the second parameter (DTTi) as a new time label associated with the connection if it still remains at least one data unit in the connection transmission queue.

10. Frame building device for a time division multiple access system, comprising means for dynamically allocating determined time intervals to the frames for the transmission of the respective data units of the various connections established simultaneously through a single transmission channel, and further comprising means for grouping together, in the same frame, the data units of a given connection by delaying the transmission of at least some of these data units so that the time interval ($\delta i$) between the transmission of two successive grouped data units can be less than a theoretical time interval determined by the value of the average theoretical binary rate of the connection (Ti).

11. Device according to claim 10 comprising means of memorization (31) to store:

- a priority queue (Fp) and, for each established connection,
- a transmission waiting queue (Fi) containing data units of the connection that are ready to be transmitted over the transmission channel, as well as:

- a connection context (CCi) containing a first parameter (TTTi) corresponding to a theoretical transmission time for the next data unit of the connection and a second parameter (DTTi) corresponding to a theoretical transmission time with a delay of the next data unit of the connection,

and including, in addition, a scheduling device (30) for the implementation of a method according to any of the claims 1 to9.

**Patentansprüche**

1. Verfahren zum Bilden von Frames für ein Zeitvielfachzugriffssystem bestehend aus der dynamischen Zuteilung bestimmter Zeitintervalle in dem Frame für die Übertragung der Dateneinheiten verschiedener Verbindungen, die gleichzeitig durch einen einzigen Übertragungskanal aufgebaut sind, wobei das Verfahren Schritte zum Gruppieren der Dateneinheiten derselben Verbindung miteinander in demselben Frame durch Verzögern der Übertragung wenigstens einiger dieser Dateneinheiten, so dass ein Zeitintervall ($\delta$i) zwischen der Übertragung von zwei aufeinanderfolgenden gruppierten Dateneinheiten kleiner als ein durch den Wert der durchschnittlichen theoretischen Binärrate der Verbindung bestimmtes theoretisches Zeitintervall (Ti) sein kann.

2. Verfahren nach Anspruch 1, wobei die einer Dateneinheit auferlegte Verzögerung höchstens gleich einer maximalen Verzögerung ($\Delta i^{Max}$) ist.

3. Verfahren nach einem der vorangehenden Ansprüche, wobei das Zeitintervall ($\delta$i) zwischen der Übertragung von zwei aufeinanderfolgenden gruppierten Dateneinheiten gleich der Übertragungszeit einer Dateneinheit über den Übertragungskanal bei der durch diesen Kanal angebotenen maximalen Rate ist.

4. Verfahren nach einem der vorangehenden Ansprüche, wobei, bei dem System gemäß dem Standard HIPERLAN/2, die Dateneinheiten einer gegebenen Verbindung in demselben Frame miteinander gruppiert werden, sobald die Zahl $2 \times \dfrac{\overline{n_i}}{N_{symb/PDU}}$ größer als Eins ist, wobei $n_s$ die Anzahl von für die Übertragung von zu der Verbindung gehörender Signalgebungsinformation verwendeten OFDM-Symbolen in dem Frame ist und wobei $N_{symb/PDU}$ die Anzahl von für das Codieren einer Dateneinheit (d.h. einer PDU) einer Verbindung verwendeten OFDM-Symbolen in dem Frame ist.

5. Verfahren nach einem der vorangehenden Ansprüche, das die folgenden Schritte aufweist:

- Managen einer Prioritätswarteschlange (Fp), die zu jeweiligen aktiven Verbindungen gehörende Zeitetiketten (TTi) enthält, wobei ein solches Zeitetikett einer theoretischen Übertragungszeit entspricht, einer Dateneinheit der zugehörigen aktiven Verbindung auf dem Übertragungskanal; und, für jede aufgebaute Verbindung,
- Managen einer Warteschlange für ein Warten auf eine Übertragung (Fi), die die Dateneinheiten der Verbindung enthält, die dazu bereit sind, auf dem Übertragungskanal übertragen zu werden;
- aktuell Halten eines ersten Parameters (TTTi) entsprechend einer theoretischen Übertragungszeit der nächsten Verbindungs-Dateneinheit; und
- aktuell Halten eines zweiten Parameters (DTTi) entsprechend einer theoretischen Übertragungszeit mit einer Verzögerung der nächsten Dateneinheit der Verbindung.

6. Verfahren nach Anspruch 5, das, bei der Eingabe der ersten Dateneinheit in die Warteschlange für ein Warten auf eine Übertragung einer bestimmten Verbindung, wenn der Wert des zweiten Parameters (DTTi) einem Zeitpunkt vor einem aktuellen Zeitpunkt (t0) entspricht, die folgenden Schritte aufweist:

- Aktualisieren (42-45) des Werts des ersten Parameters (TTTi) der Verbindung;
- Aktualisieren (46) des Werts des zweiten Parameters (DTTi) der Verbindung durch Addieren des Werts entsprechend der maximalen Verzögerung ($\Delta i^{Max}$) zu dem Wert des ersten Parameters (TTTi), wie er aktualisiert ist, wann immer es nötig ist;

und, in allen Fällen,

- Eingeben (47) des aktualisierten Werts des zweiten Parameters (DTTi) als zu der Verbindung gehörendes Zeitetikett (TTi) in die Prioritätswarteschlange (Fp).

7. Verfahren nach Anspruch 6, wobei, wann immer es nötig ist, der erste Parameter (TTTi) der Verbindung durch Zuordnen des Werts des aktuellen Zeitpunkts (t0) zu ihm aktualisiert wird.

8. Verfahren nach Anspruch 6, wobei, wann immer es nötig ist, der erste Parameter (TTTi) der Verbindung durch Zuordnen eines minimalen Werts zwischen einerseits dem Wert des aktuellen Zeitpunkts (t0) und andererseits dem minimalen Wert zwischen den jeweiligen Werten der Zeitetiketten (TTi) der Prioritätswarteschlange (Fp), die zu anderen Verbindungen gehören, deren Warteschlange für ein Warten auf eine Übertragung (Fj) nicht leer ist, zu ihm aktualisiert wird.

9. Verfahren nach einem der Ansprüche 5 bis 8, das bei einer Ausgabe einer Dateneinheit einer gegebenen Verbindung von der Warteschlange für ein Warten auf eine Übertragung die folgenden Schritte aufweist:

- Aktualisieren (51) des Werts des ersten Parameters (TTTi) der Verbindung durch Addieren des Werts des theoretischen Zeitintervalls (Ti) zu ihm;
- Aktualisieren (52, 53, 54) des Werts des zweiten Parameters (DTTi) der Verbindung entweder durch Addieren (56) zu dem aktualisierten Wert des ersten Parameters (TTTi) von einem Wert entsprechend der maximalen Verzögerung ($\Delta i^{Max}$), wenn der Wert des ersten aktualisierten Parameters (TTTi) größer als der aktuelle Wert des zweiten Parameters (DTTi) oder gleich diesem ist, erhöht um das Zeitintervall ($\delta i$) zwischen der Übertragung von zwei aufeinanderfolgenden gruppierten Dateneinheiten, oder sonst, im entgegengesetzten Fall, durch Addieren (55) des Werts des Zeitintervalls ($\delta i$) zwischen der Übertragung von zwei aufeinanderfolgenden gruppierten Dateneinheiten zu dem Wert des aktuellen Werts des zweiten Parameters (DTTi), und
- Eingeben (56, 57) des aktualisierten Werts des zweiten Parameters (DTTi) als ein zu der Verbindung gehörendes neues Zeitetikett in die Prioritätswarteschlange (Fp), wenn noch wenigstens eine Dateneinheit in der Warteschlange für ein Warten auf eine Übertragung bleibt.

10. Frame-Bildungsvorrichtung für ein Zeitvielfachzugriffssystem mit einer Einrichtung zum dynamischen Zuteilen bestimmter Zeitintervalle zu den Frames für die Übertragung der jeweiligen Dateneinheiten der verschiedenen Verbindungen, die gleichzeitig durch einen einzigen Übertragungskanal aufgebaut sind, und weiterhin mit einer Einrichtung zum Gruppieren der Dateneinheiten einer gegebenen Verbindung miteinander in demselben Frame durch Verzögern der Übertragung wenigstens einiger dieser Dateneinheiten, so dass das Zeitintervall ($\delta i$) zwischen der Übertragung von zwei aufeinanderfolgenden gruppierten Dateneinheiten kleiner als ein durch den Wert der durchschnittlichen Binärrate der Verbindung bestimmtes theoretisches Zeitintervall (Ti) sein kann.

11. Vorrichtung nach Anspruch 10, die eine Einrichtung zur Speicherung (31) aufweist, um Folgendes zu speichern:

- eine Prioritätswarteschlange (p), und, für jede aufgebaute Verbindung,
- eine Warteschlange für ein Warten auf eine Übertragung (Fi), die Dateneinheiten der Verbindung enthält, die dazu bereit sind, über den Übertragungskanal übertragen zu werden, sowie:

- einen Verbindungskontext (CCi), der einen ersten Parameter (TTTi) entsprechend einer theoretischen Übertragungszeit für die nächste Dateneinheit der Verbindung und einen zweiten Parameter (DTTi) entsprechend einer theoretischen Übertragungszeit mit einer Verzögerung der nächsten Dateneinheit der Verbindung enthält,

und die zusätzlich eine Zeitplanungsvorrichtung (30) für die Implementierung eines Verfahrens nach einem der Ansprüche 1 bis 9 enthält.

**Revendications**

1. Procédé pour construire des trames pour système d'accès multiple à répartition dans le temps, consistant en l'attribution dynamique d'intervalles de temps déterminés dans la trame pour la transmission des données élémentaires de diverses connexions établies simultanément par l'intermédiaire d'une seule voie de transmission, le procédé comprenant des étapes pour regrouper dans la même trame les données élémentaires de la même connexion en retardant la transmission d'au moins certaines de ces données élémentaires, de façon qu'un intervalle de temps ($\delta i$) entre la transmission de deux données élémentaires successives groupées puisse être inférieur à un intervalle de temps théorique (Ti) déterminé par la valeur du débit binaire moyen théorique de la connexion.

2. Procédé selon la revendication 1, par lequel le retard imposé à une donnée élémentaire est au maximum égal à un retard maximal ($\Delta i^{Max}$).

3. Procédé selon l'une quelconque des revendications précédentes, par lequel l'intervalle de temps ($\delta i$) entre la transmission de deux données élémentaires successives groupées est égal au délai de transmission d'une donnée élémentaire par l'intermédiaire de la voie de transmission, au débit maximal offert par cette voie.

4. Procédé selon l'une quelconque des revendications précédentes par lequel, avec le système conforme à la norme HIPERLAN/2, les données élémentaires d'une connexion donnée sont regroupées dans la même trame dès que le nombre $2 \times \frac{n_s}{N_{symb/PDU}}$ est supérieur à l'unité, $n_s$ étant le nombre de symboles MROF dans la trame consacrée à la transmission d'informations de signalisation associées à la connexion et $N_{symb/PDU}$ étant le nombre de symboles MROF dans la trame consacrée au codage d'une donnée élémentaire (c'est-à-dire une PDU) de la connexion.

5. Procédé selon l'une quelconque des revendications précédentes, comprenant les étapes consistant à :

   - gérer une file d'attente prioritaire (Fp) contenant des étiquettes de temps ($TT_i$) associées à des connexions actives respectives, une telle étiquette de temps correspondant à un temps de transmission théorique, sur la voie de transmission, d'une donnée élémentaire de la connexion activé associée ;

   et, pour chaque connexion établie,

   - gérer une file d'attente de transmission (Fi) contenant les données élémentaires de la connexion prêtes à être transmises sur la voie de transmission ;
   - maintenir actualisé un premier paramètre (TTTi) correspondant à un temps de transmission théorique de la prochaine donnée élémentaire d'une connexion ; et
   - maintenir actualisé un second paramètre (DTTi) correspondant à un temps de transmission théorique avec un retard de la prochaine donnée élémentaire de la connexion.

6. Procédé selon la revendication 5 comprenant, au moment de l'entrée de la première donnée élémentaire dans la file d'attente de transmission d'une connexion déterminée, si la valeur du second paramètre (DTTi) correspond à un instant antérieur à l'instant immédiat (r0), les étapes consistant à :

   - actualiser (42-45) la valeur dudit premier paramètre (TTTi) de la connexion ;
   - actualiser (46) la valeur dudit second paramètre (DTTi) de la connexion, en additionnant, avec la valeur dudit premier paramètre (TTTi) actualisé chaque fois que nécessaire, la valeur correspondant au retard maximal ($\Delta i^{Max}$) ;

   et, dans tous les cas,

   - entrer (47= dans la file d'attente prioritaire (Fp) la valeur actualisée dudit second paramètre (DTTi) comme étiquette de temps (TTi) associée à la connexion.

7. Procédé selon la revendication 6, dans lequel, chaque fois que nécessaire, ledit premier paramètre (TTTi) de la connexion est actualisé en lui attribuant la valeur de l'instant immédiat (t0).

8. Procédé selon la revendication 6, dans lequel, chaque fois que nécessaire, ledit premier paramètre (TTTi) de la connexion est actualisé en lui attribuant une valeur minimale entre, d'une part, la valeur de l'instant immédiat (t0) et, d'autre part, la valeur minimale entre les valeurs respectives des étiquettes de temps (TTi) de la file d'attente prioritaire (Fp) qui sont associées à d'autres connexions dont la file d'attente de transmission (Fj) n'est pas vide.

**9.** Procédé selon l'une quelconque des revendications 5 à 8, comprenant, au moment de la sortie d'une donnée élémentaire d'une connexion donnée hors de la file d'attente de transmission, les étapes consistant à :

- actualiser (51) la valeur dudit premier paramètre (TTTi) de la connexion en l'additionnant avec la valeur dudit intervalle de temps théorique Ti) ;
- actualiser (52, 53, 54) la valeur dudit second paramètre (DTTi) de la connexion soit en additionnant (56) avec ladite valeur actualisée dudit premier paramètre (TTTi) une valeur correspondant au retard maximal ($\Delta i^{Max}$) si la valeur du premier paramètre actualisé (TTTi) est supérieure ou égale à la valeur instantanée du second paramètre (DTTi) augmentée de l'intervalle de temps ($\delta i$) entre la transmission de deux données élémentaires successives groupées, soit, sinon, dans le cas contraire, en additionnant (55) avec la valeur instantanée du second paramètre (DTTi) la valeur de l'intervalle de temps ($\delta i$) entre la transmission de deux données unitaires successives groupées ;
- entrer (56, 57) dans la file d'attente prioritaire (Fp) ladite valeur actualisée du second paramètre (DTTi) comme nouvelle étiquette de temps associée à la connexion s'il persiste au moins une donnée élémentaire dans la file d'attente de transmission de la connexion.

**10.** Dispositif de construction de trames pour système d'accès multiple à répartition dans le temps, comprenant un moyen pour affecter de manière dynamique des intervalles de temps déterminés aux trames pour la transmission des données élémentaires respectives des diverses connexions établies simultanément par l'intermédiaire d'une seule voie de transmission, et comprenant en outre un moyen pour regrouper, dans la même trame, les données élémentaires d'une connexion donnée en retardant la transmission d'au moins certaines de ces données élémentaires de façon que l'intervalle de temps ($\delta i$) entre la transmission de deux données élémentaires successives groupées puisse être inférieur à un intervalle de temps théorique déterminé par la valeur du débit binaire moyen théorique de la connexion (Ti).

**11.** Dispositif selon la revendication 10 comprenant un moyen de mémorisation (31) pour enregistrer :

- une file d'attente prioritaire (Fp) et, pour chaque connexion établie,
- une file d'attente de transmission (Fi) contenant des données élémentaires de la connexion qui sont prêtes à être transmises sur la voie de transmission, ainsi que :

- un contexte de connexion (CCi) contenant un premier paramètre (TTTi) correspondant à un temps de transmission théorique pour la prochaine donnée élémentaire de la connexion et un second paramètre (DTTi) correspondant à un temps de transmission théorique avec un retard de la prochaine donnée élémentaire de la connexion,

et comprenant, en outre, un dispositif d'ordonnancement (30) pour la mise en oeuvre d'un procédé selon l'une quelconque des revendications 1 à 9.

## FIG.1.

## FIG.2.

FIG.3.

FIG.4.

```
        ┌──────────┐
        │  RX PDU  │──40
        └──────────┘
             │
             ▼
    NO    ╱────────╲    41
  ◄───────│ Qi = 0 ?│
          ╲────────╱
             │ YES
             ▼
    NO    ╱──────────╲   42
  ◄───────│ DTTi < t0 ?│
          ╲──────────╱
             │ YES
             ▼
 ┌────────┐ NO  ╱──────────────╲  43          45
 │TTTi=t0 │◄────│{TTj,Qj≠0}=φ? │───►  ┌──────────────────────────────┐
 └────────┘     ╲──────────────╱      │TTTi=max{TTTi,min{t0,min{TTj,Qj=0}}}│
      │                                └──────────────────────────────┘
      │                  46                        │
      │      ┌─────────────────────┐               │
      └─────►│ DTTi = TTTi + Δi Max│◄──────────────┘
             └─────────────────────┘
                        │
                        ▼
             ┌─────────────────────┐
             │   DTTi ⟹ Fp         │──47
             └─────────────────────┘
                        │
                        ▼
             ┌─────────────────────┐
             │   Qi = Qi + 1       │──48
             └─────────────────────┘
                        │
                        ▼
                  ┌──────────┐
                  │   END    │──49
                  └──────────┘
```

FIG.5

50 — TX PDU

51 — $TTT_i = TTT_i + T_i$

52 — $TTT_i \geq DTT_i + \delta_i?$

NO → 53 — $DTT_i = DTT_i + \delta_i$

YES → 54 — $DTT_i = TTT_i + \Delta_i^{Max}$

55 — $Q_i = Q_i - 1$

56 — $Q_i \neq 0?$

NO →

YES → 57 — $DTT_i \Longrightarrow F_p$

58 — END

EP 1 271 803 B1

#n    #n+1    #n+2    #n+3    #n+4    #n+5    #n+6

TTTi    Ti    TTTi    TTTi    TTTi    TTTi    TTTi    TTTi    $t_0$

$\Delta 3$

$\Delta 2$

$\Delta_i{}^{Max}$    $\Delta 4$    $\Delta_i{}^{Max}$

$\delta_i$    $t_0$

DTTi    DTTi

FIG.6.

FIG.7.

R

0,9
0,8
0,7
0,6
0,5
0,4
0,3
0,2
0,1
0

$\dfrac{n_S}{N_{SYMBOL/PDU}}$    $\dfrac{2.n_S}{N_{SYMBOL/PDU}}$    $n_{PDU}$